# DEMANDE DE BREVET EUROPEEN

(11) **EP 1 037 433 A1**
(43) Date de publication de la demande: **20.09.2000**
(21) Numéro de dépôt: 00400644.1
(22) Date de dépôt: 09.03.2000
(51) Int. Cl.: H04L 12/56, H04Q 3/00

(54) **Procédé de distribution de tables de routage dans un réseau de télécommunication**

(30) Priorité: 18.03.1999 FR 9903372
(71) Demandeur: ALCATEL, 75008 Paris (FR)
(72) Inventeur: Burger, Philippe, 67190 Mutzig Illkirch (FR); Guilloux, Stephan, 92000 Nanterre (FR); Dutil, Thierry, 92000 Nanterre, Paris (FR); Thiaville, Eric, 75017 Paris (FR)
(74) Mandataire: Sciaux, Edmond

(57) **Abrégé**

Il concerne un réseau de télécommunication comportant une couche réseau incapable de faire une remise fiable.

Il consiste à :
- diffuser par inondation, d'un noeud qui démarre vers tous les autres noeud, une trame de démarrage pour solliciter l'envois, par chacun des autres noeuds, d'une trame de réponse adressée au noeud qui a émis la trame de démarrage, cette trame de réponse contenant toutes les routes locales utilisables à partir du noeud qui émet la trame réponse considérée ;
- mettre à jour la table de routage d'un noeud qui démarre, à partir des routes indiquées dans toutes les trames de réponse qu'il reçoit ;
- et à diffuser (49) par inondation une trame de mise à jour (UPDATE-r) lorsque qu'un noeud détecte une modification de la configuration du réseau, cette trame contenant toutes les routes locales disponibles à partir du noeud considéré et qui ont été modifiées depuis la dernière émission d'une telle trame par ce noeud.

Ce procédé est caractérisé en ce que pour diffuser par inondation une trame de démarrage ou de mise à jour, il consiste à encapsuler les données de cette trame dans au moins une trame d'un protocole de couche de liaison à remise fiable.

## Description

L'invention concerne un procédé de distribution de tables de routage dans un réseau de télécommunication comportant une pluralité de noeuds et des liaisons entre ces noeuds, chaque noeud utilisant une table de routage pour router des messages en direction de l'un quelconque des autres noeuds du réseau. Ces tables de routages doivent être mises à jour lorsque la configuration du réseau est modifiée par un événement tel que la mise en service ou hors service d'un noeud, ou d'une liaison entre deux noeuds. Il concerne plus particulièrement un réseau de télécommunication comportant une couche réseau incapable de faire une remise fiable, par exemple un réseau utilisant le protocole Internet.

Ces liaisons peuvent être permanentes ou non. Dans le premier cas, il s'agit essentiellement de liaisons spécialisées. Dans le cas où les liaisons ne sont pas permanentes, ce sont des liaisons ordinaires d'un réseau public qui sont ouvertes à la demande c'est à dire uniquement lorsque des informations sont à transmettre. Ces liaisons non permanentes sont facturées à la communication ou au temps de communication. Il est donc impératif de réduire autant que possible le transit des tables de routage sur ces liaisons non permanentes.

Dans les grands réseaux, il est impossible de spécifier toutes les routes de façon statique. Il est donc nécessaire d'utiliser un protocole dynamique de distribution des tables de routage à tous les noeuds d'un réseau. Un protocole de distribution des table de routage est dit dynamique lorsque la distribution des tables de routage est réitérée pour prendre en compte les événements qui affectent la configuration du réseau. La plupart des protocoles dynamiques publiés dans les recommandations de l'IETF (Internet Engineering Task Force) utilisent une distribution périodique.

On connaît un protocole de routage dynamique appelé RIP-2 (Routing Information Protocol 2) pour distribuer les tables de routage. Ce protocole correspond mal aux besoins d'un grand réseau, car il diffuse les tables de routage de façon systématique et périodique, avec une période relativement courte pour pouvoir prendre en compte assez rapidement les changements de configuration du réseau. IETF recommande une période de 30s pour RIP-2. Ce protocole continue de diffuser des tables de routage même pendant les heures de non utilisation du réseau, et en particulier sur les liaisons non permanentes, alors qu'aucun changement ne s'est produit dans la configuration du réseau depuis la précédente diffusion des tables de routage.

Selon certains autres protocoles connus, la distribution des tables de routage est déclenchée par un événement ; par exemple, selon le protocole appelé "Triggered RIP", décrit dans les recommandations RFC 2091 et RFC 2092 de IETF. Ce protocole effectue une distribution par un envoi individuel des tables de routage à chaque noeud du réseau, lorsqu'un noeud détecte un changement de configuration du réseau. Pour cet envoi individuel, il faut que chaque noeud connaisse l'adresse de chacun des autres noeuds. Ce protocole nécessite donc une opération de configuration de chaque noeud, qui est assez lourde à effectuer. De plus, comme ce protocole est susceptible de s'appuyer sur un réseau de télécommunication numérique à intégration de service, il utilise un système d'acquittement pour garantir l'acheminement des tables de routage. Ce système d'acquittement engendre du trafic supplémentaire qui occupe des ressources du réseau.

Le document de PEYRAVIAN M et Al : « ALGORITHM FOR EFFICIENT GENERATION OF LINK-STATE UPDATES IN ATM NETWORKS », COMPUTER NETWORKS AND ISDN SYSTEMS, NL, NORTH HOLLAND PUBLISHING, AMSTERDAM, vol 29, n°2, 1997, pages 237-247, décrit un procédé de routage qui réduit la consommation de ressources en faisant un compromis entre une mise à jour périodique et une mise à jour déclenchée par un événement. Cependant ce procédé n'est décrit que dans le cadre d'un réseau où les services de la couche réseau sont fournis par le protocole ATM qui assure une remise fiable. Ce procédé n'est pas transposable à un réseau comportant une couche réseau incapable de faire une remise fiable, par exemple un réseau utilisant le protocole Internet.

Le document WO 98/21856 décrit un procédé de routage dans le cadre d'un réseau ou les services de la couche réseau sont fournis par le protocole ATM qui assure une remise fiable. Ce procédé n'est pas transposable à un réseau comportant une couche réseau incapable de faire une remise fiable, par exemple un réseau utilisant le protocole Internet.

Le but de l'invention est de proposer un protocole qui soit peu consommateur de ressources, tout en étant utilisable dans un réseau comportant une couche réseau incapable de faire une remise fiable. Selon l'invention, un procédé de distribution de tables de routage dans un réseau de télécommunication comportant une couche réseau incapable de faire une remise fiable, cette distribution des tables consistant à :
- diffuser par inondation, d'un noeud qui démarre vers tous les autres noeud, une trame de démarrage pour solliciter l'envoi (36), par chacun des autres noeuds, d'une trame de réponse adressée au noeud qui a émis la trame de démarrage, cette trame de réponse contenant toutes les routes locales utilisables à partir du noeud qui émet la trame réponse considérée ;
- mettre à jour la table de routage d'un noeud qui démarre, à partir des routes indiquées dans toutes les trames de réponse qu'il reçoit ;
- et à diffuser par inondation une trame de mise à jour, au moins lorsque qu'un noeud détecte une modification de la configuration du réseau, cette trame contenant toutes les routes locales disponibles à partir du noeud considéré et qui ont été modifiées depuis la dernière émission d'une telle trame par ce noeud ;
est caractérisé en ce que pour diffuser par inondation une trame de démarrage ou de mise à jour, il consiste à encapsuler les données de cette trame dans au moins une trame d'un protocole de couche de liaison à remise fiable.

La couche de liaison qui supporte la couche réseau utilise par exemple le protocole X25 muni d'une fonction supplémentaire de diffusion par inondation. Le protocole X25 procure une remise fiable parce qu'il utilise des accusés de réception. Par conséquent, le protocole de routage n'a pas besoin d'utiliser lui-même des accusés de réception. Il en résulte une économie de bande passante.

D'autres types de protocole de transmission, orientés connexion à remise fiable, tel que le protocole connu sous le nom de relayage de trame (Frame-Relay), peuvent être utilisés dans la couche liaison. Le protocole de la couche de liaison doit être capable de faire une véritable diffusion, c'est à dire du type inondation .

Selon un mode de mise en oeuvre préférentiel, le procédé selon l'invention est caractérisé en ce qu'il consiste en outre à :
- diffuser périodiquement par inondation, à partir de chaque noeud du réseau, une trame contenant toutes les routes locales disponibles à partir du noeud considéré ;
- et éliminer périodiquement, dans la table de routage de chaque noeud du réseau, toutes les routes dont le dernier enregistrement est plus ancien qu'une date prédéterminée.

Ce mode de mise en oeuvre particulier permet de remédier aux cas où un noeud cesse de fonctionner sans avoir la possibilité d'exécuter une procédure d'arrêt pour informer les autres noeuds de la disparition des routes locales qui passaient par ce noeud. Ces cas étant rares, il suffit que la diffusion périodique soit peu fréquente, par exemple une fois par jour, pour assurer qu'aucun noeud ne reste pendant longtemps sans table de routage à jour.

L'invention sera mieux comprise et d'autres caractéristiques apparaîtront à l'aide de la description ci-dessous des principales opérations réalisées par ce protocole, et des figures l'accompagnant :
- La figure 1 représente un exemple de réalisation d'automate pour le démarrage d'un noeud .
- La figure 2 représente un exemple de réalisation d'automate pour l'arrêt d'un noeud.
- La figure 3 représente un exemple de réalisation d'automate pour la réception d'une trame appelée HELLO .
- La figure 4 représente un exemple de réalisation d'automate pour le traitement d'une trame appelée UPDATE .
- La figure 5 représente un exemple de réalisation d'automate pour le traitement d'une trame appelée RESPONSE .
- La figure 6 représente un exemple de réalisation d'automate pour la synchronisation journalière des tables de routage.
- La figure 7 représente un exemple de réalisation d'automate pour la datation des routes.

Les liaisons physiques utilisées pour relier les noeuds sont supposés fiables. Pour obtenir cette fiabilité, il faut mettre en oeuvre un procédé connu permettant de remplacer une liaison, en cas de défaillance de celle-ci. Le protocole selon l'invention utilise le principe de "présomption de joignabilité". Ainsi, à partir de l'instant où elle est connue, chaque route est considérée comme joignable, tant que le contraire n'a pas été prouvé ou signalé.

Les exemples d'automates décrits ci-dessous utilisent trois types de trame appelées respectivement: HELLO, UPDATE et RESPONSE. La trame HELLO est utilisée par un noeud qui démarre, pour signaler sa présence à un ensemble de noeuds déjà présents. Cette trame ne contient rien de plus qu'une en-tête qui indique l'identité du noeud expéditeur. La trame RESPONSE est utilisée pour transporter une information ne devant être envoyée qu'à un noeud donné, notamment pour réaliser une mise à jour individuelle des tables de routage dans un noeud qui vient de démarrer.

La trame UPDATE est utilisée pour signaler un événement survenu sur un noeud à tous les autres noeuds du même réseau. On distinguera par la suite :
- une trame UPDATE-R qui contient l'identité de toutes les routes locales, c'est à dire qui passent par ce noeud, qui sont joignables, sauf celle qui est utilisée pour émettre la trame considérée (selon l'algorithme "Split Horizon") ;
- et une trame UPDATE-r qui contient l'identité des routes locales disponibles à partir du noeud considéré et qui ont été modifiées depuis la dernière émission d'une telle trame par ce noeud, en précisant pour chacune si elle est devenue joignable ou si elle est devenue injoignable.

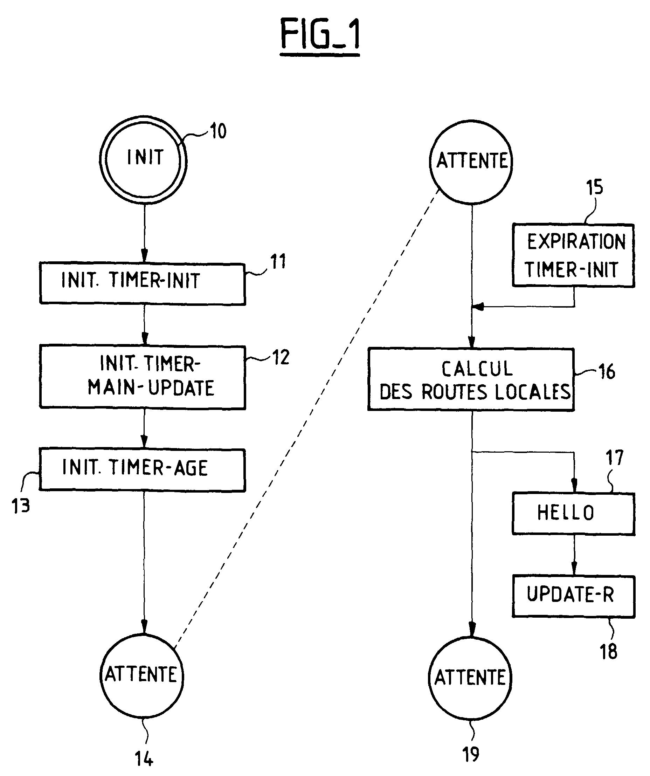

La **figure 1** représente un exemple de réalisation d'automate pour le démarrage d'un noeud. Cet automate de démarrage réalise successivement les opérations suivantes :
- Initialisation 10 de tous les automates du noeud, puis le lancement 11 d'un temporisateur nommé Timer-Init qui crée une temporisation aléatoire retardant l'émission de la trame HELLO, pour limiter l'engorgement du réseau par les trames diffusées lors des démarrages simultanés de plusieurs noeuds.
- Lancement 12 d'un temporisateur nommé Timer-Main-Update dont la fonction sera décrite plus loin.
- Lancement 13 d'un temporisateur nommé Timer-Age dont la fonction sera décrite plus loin.
- Attente 14 d'un événement.
- Expiration 15 de la temporisation aléatoire du temporisateur
Timer-Init.
- Calcul 16 des routes locales.
- Diffusion 17 d'une trame HELLO qui contient seulement l'identité du noeud émetteur.
- Diffusion 18 d'une trame UPDATE-R qui contient cette identité et les identités de toutes les routes locales.
- Attente 19 d'un autre événement.

Une trame UPDATE-R contenant la liste de toutes routes locales est ainsi émise immédiatement après la première trame HELLO. Ces trames sont ré-émises par les noeuds, de proche en proche, pendant une durée bornée par la taille du réseau, pour réaliser une diffusion du type inondation. De cette façon, tous les autres noeuds sont informés des nouvelles routes disponibles.

Ce procédé réduit le coût de distribution des tables de routage car la distribution des tables est déclenchée a priori uniquement sur les événements affectant la configuration du réseau, et parce qu'elle est faite par une diffusion de type inondation, c'est à dire une transmission simultanée vers tous les noeuds, sans acquittement, les tables se propageant de noeud à noeud pendant une durée bornée par la taille du réseau, comme une inondation. Un même noeud recevant les mêmes tables par plusieurs chemins différents (sauf s'il n'a qu'une liaison avec le reste du réseau), la distribution des tables est suffisamment sûre pour qu'il ne soit pas nécessaire de prévoir un système d'acquittement, au moins pour certaines applications. La diffusion n'étant faite, en principe, que si un réel changement de configuration est détecté, les liaisons non permanentes sont donc utilisées le moins possible.

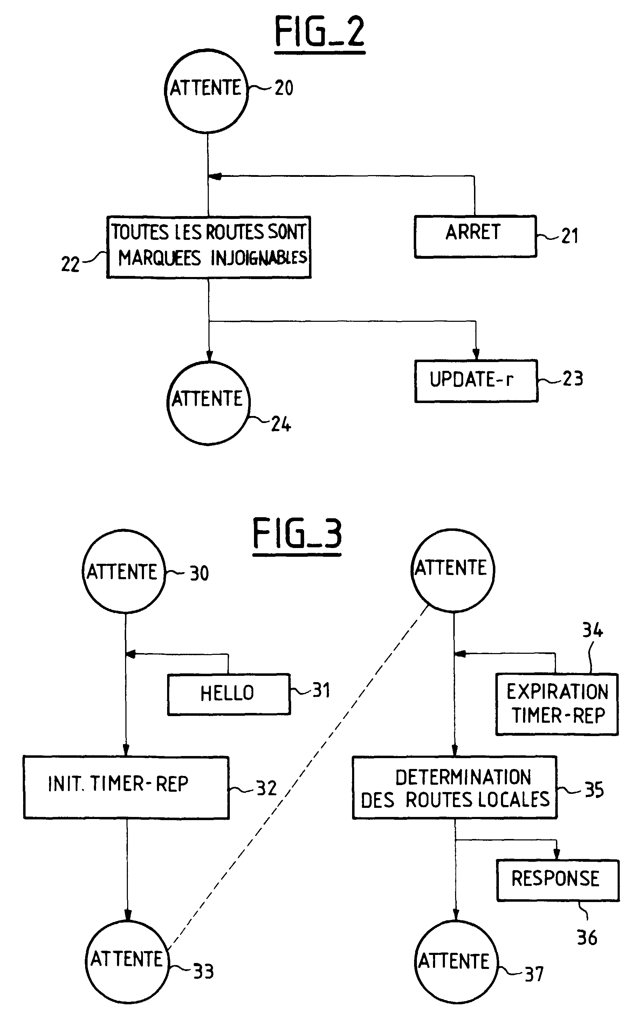

La **figure 2** représente un exemple de réalisation d'automate pour l'arrêt d'un noeud. L'automate d'arrêt réalise successivement les opérations suivantes :
- Attente 20 d'un événement.
- Réception 21 d'un ordre d'arrêt.
- Mémorisation 22, dans sa propre table de routage, du fait que toutes les routes locales sont devenues injoignables.
- Diffusion 23 d'une trame UPDATE-r contenant l'identité de ce noeud et indiquant que toutes les routes locales sont devenues injoignables.
- Attente 24 d'un événement.

Il peut arriver que cet automate d'arrêt n'ait pas le temps d'être exécuté (lors d'une panne par exemple). Dans ce cas, et si ce noeud ne redémarre pas, ou bien si l'une de ses routes devenait injoignable entre-temps sans que ce noeud détecte ce changement, les autres noeuds conservent dans leurs tables de routage des routes qui ne sont plus joignables. Un processus de confirmation des routes existantes et d'élimination des routes trop vieilles est chargé d'effacer les routes obsolètes dans les tables de routage des autres noeuds. Ce processus sera détaillé plus loin.

La **figure 3** représente un exemple de réalisation d'automate pour la réception d'une trame HELLO, celle-ci provenant d'un noeud qui vient de démarrer. Tous les autres noeuds répondront donc en indiquant leurs routes locales dans une trame RESPONSE adressée au noeud qui a émis la trame HELLO. Il pourrait se produire une congestion du réseau au voisinage du noeud qui vient de démarrer. Pour éviter cela, la réception d'une trame HELLO dans un noeud démarre un temporisateur nommé Timer-Rep pour une temporisation aléatoire. Il faut noter que sa durée devra être suffisamment importante pour tenir compte du nombre de noeuds du réseau.

L'automate réalise successivement les opérations suivantes :
- Attente 30 d'un événement.
- Réception 31 d'une trame HELLO.
- Démarrage 32 du temporisateur Timer-Rep.
- Attente 33 d'un événement.
- Expiration 34 de la temporisation du temporisateur Timer-Rep.
- Détermination 35 de toutes les routes locales.
- Diffusion 36 de la trame RESPONSE à destination seulement du noeud qui avait émis la trame HELLO, cette trame RESPONSE contenant l'identité du noeud émetteur, l'identité du noeud destinataire, et les identités de toutes les routes locales, pour une mise à jour individuelle des tables de routage du noeud qui vient de démarrer
- Attente 37 d'un événement.

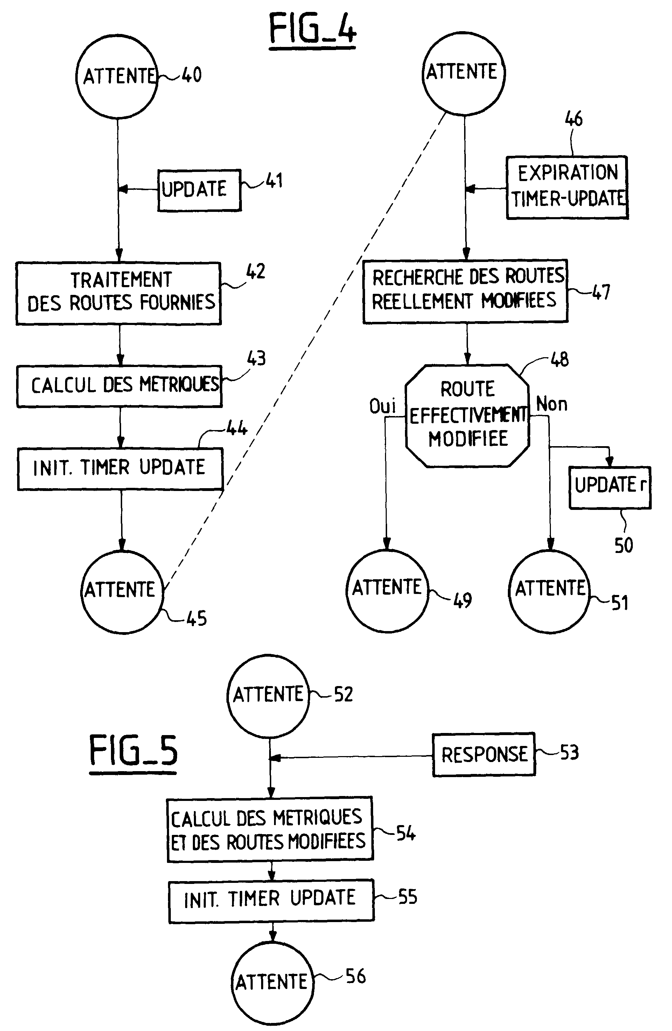

La **figure 4** représente un exemple de réalisation d'automate pour le traitement d'une trame UPDATE. Une trame UPDATE est diffusée par un noeud notamment lorsqu'il détecte l'apparition d'un événement qui modifie la configuration du réseau. En principe, tout noeud qui reçoit cette trame rediffuse l'information un peu plus loin. Cependant, l'automate vérifie s'il est réellement utile de rediffuser le contenu d'une trame UPDATE-r pour mettre à jour les tables de routage des autres noeuds. Pour cela il attend un peu, pour le cas où il recevrait une trame UPDATE contredisant la précédente.

S'il reçoit une autre trame UPDATE indiquant une nouvelle modification qui contredit la précédente, il est inutile de diffuser successivement des informations qui se contredisent. En effet, une modification peut être transitoire, et les routes peuvent retrouver leur état d'origine rapidement. Si l'automate constate qu'il y a eu effectivement une modification pour au moins une route, il diffuse une trame UPDATE-r vers tous les noeuds auxquels il est relié, pour signaler chaque route modifiée. Si aucune route n'a réellement été modifiée, il ne diffuse aucune trame UPDATE.

L'automate réalise donc successivement les opérations suivantes :
- Attente 40 d'un événement.
- Réception 41 d'une trame UPDATE.
- Traitement 42 des routes indiquées dans la trame UPDATE reçue.
- Calcul 43 des métriques, c'est à dire évaluation des coût respectifs encourus si on utilise ces différentes routes.
- Démarrage 44 du temporisateur Timer-Update. S'il a déjà été démarré, l'automate ne le redémarre pas à zéro.
- Attente 45.
- Expiration 46 de la temporisation du temporisateur Timer-Update.
- Détermination 47 des routes effectivement modifiées : Si, pendant la temporisation de Timer-Update, une nouvelle trame UPDATE arrive et indique le retour à l'état précédent d'une route dont l'état était modifié, alors cette route est considérée comme n'étant pas effectivement modifiée.
- Vérification 48 des routes :
   -- Si aucune route n'a été réellement modifiée, attente 49.
   -- Si au moins une route a été réellement modifiée, diffusion 50 d'une trame UPDATE-r qui indique seulement la ou les routes réellement modifiées ; puis attente 51.

La **figure 5** représente un exemple de réalisation d'automate pour le traitement d'une trame RESPONSE. Cette trame est transmise d'un noeud ayant reçu une trame HELLO, à un autre noeud ayant émis cette trame HELLO, lorsque ce dernier vient de démarrer et a donc besoin d'une mise à jour individuelle. L'automate réalise les opérations suivantes :
- Attente 52.
- Réception d'une trame RESPONSE.
- Calcul 54 des métriques et des routes modifiées, par rapport aux routes éventuellement déjà mémorisées dans le noeud considéré.
- Démarrage 55 du temporisateur Timer-Update.
- Attente 56.

Une fois le calcul des métriques et la découverte des routes injoignables effectués, l'automate démarre le temporisateur Timer-Update pour pouvoir vérifier, après un certain délai, quelles sont les routes réellement modifiées. Lorsque cette temporisation expire, c'est l'automate de la figure 4 qui est activé pour cette vérification.

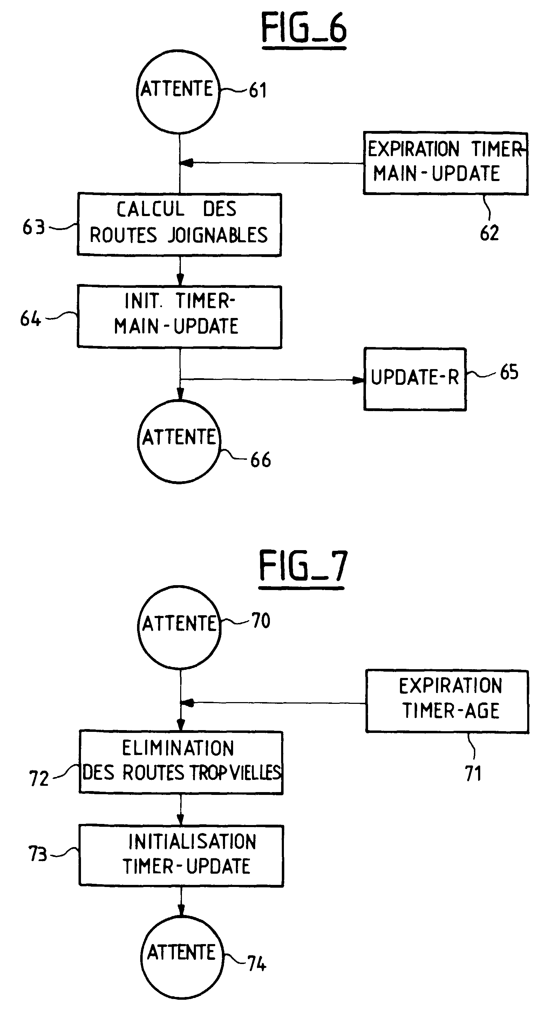

Les automates des **figures 6 et 7** mettent en oeuvre respectivement le processus de confirmation des routes existantes et le processus d'élimination des routes trop vieilles, évoqués plus haut. La trame UPDATE-r est diffusée quotidiennement par chaque noeud même si aucun autre événement n'intervient durant ce laps de temps, de manière à pouvoir gérer l'obsolescence des routes. Il peut arriver en effet qu'un noeud disparaisse du réseau sans pouvoir exécuter l'automate d'arrêt, à la suite d'une panne par exemple. Si ce noeud redémarre, il émet une trame HELLO, comme décrit précédemment en se référant à la figure1, et les tables sont donc remises à jour correctement dans tous les noeuds. Mais, si ce noeud ne redémarre pas, il faut néanmoins indiquer dans les tables de routage des autres noeuds, que les routes qui étaient accessibles par ce noeud ne sont plus accessibles.

Ce processus d'élimination consiste en une datation des routes mémorisées dans les tables de routage, et ensuite un effacement des routes trop vieilles, dans ces tables. Chaque route mémorisée dans un table de routage a une validité de 25h. Si, pendant cet intervalle, cette route n'a pas été modifiée ou confirmée par une mise à jour, elle est présumée non valide et elle est retirée de la table qui la contient. Pour confirmer la validité de ses routes locales avant la fin du délai de 25h, chaque noeud confirme la validité de ses routes locales avec une période inférieure à 25h, par exemple 24h.

La **figure 6** représente un exemple de réalisation d'automate pour la confirmation des routes existantes. Un temporisateur appelé Timer-Main-Update déclenche périodiquement, par exemple toutes les 24h, l'exécution de cet automate. Pour éviter la synchronisation d'envoi des trames par les différents noeuds, provoquant une congestion sur le réseau, il est recommandé d'ajouter une valeur aléatoire (de l'ordre de quelques minutes) au temporisateur Timer-Main-Update lors des démarrages 12 et 64 du temporisateur Timer-Main-Update.

Cet automate réalise successivement les opérations suivantes :
- Attente 61.
- Expiration 62 de la temporisation du temporisateur Main-Update.
- Calcul 63 des routes locales joignables à partir du noeud considéré.
- Redémarrage 64 du temporisateur Timer-Main-Update.
- Diffusion 65 d'une trame UPDATE-R contenant l'identité du noeud considéré, et l'identité des routes locales disponibles à partir du noeud considéré.
- Attente 66.

La **figure 7** représente un exemple de réalisation d'automate pour l'élimination des routes trop vieilles. Un temporisateur appelé Timer-Age déclenche périodiquement, par exemple toutes les 25h, l'exécution de cet automate. Cet automate lit dans la table de routage du noeud considéré la date de dernier enregistrement de chacune des routes mémorisées dans le noeud considéré, puis compare cette date avec une date calculée en soustrayant 25h à la date courante, pour déterminée une date limite. Il efface de la table toutes les routes trop vielles, c'est à dire celles dont la date d'enregistrement est antérieure à la date limite. L'automate réalise successivement les opérations suivantes :
- Attente 70.
- Expiration 71 de la temporisation du temporisateur Timer-Age.
- Elimination 72 des routes trop vieilles dans la table de routage.
- Démarrage 73 du temporisateur Timer-Update.
- Attente 74.

Les formats des différentes trames sont analogues aux formats des trames utilisées dans le protocole connu RIP-2. Tous les champs ont la même signification que pour RIP-2. Seules leurs valeurs respectives changent.

Tout comme les autres protocoles de la famille RIP, le procédé selon l'invention utilise le protocole UDP (User Datagram Protocol, Recommandation RFC768 de l'IETF) pour faire transiter ses trames. Comme le protocole X25 garantit une remise fiable, il n'est pas nécessaire d'utiliser ni le protocole TCP (Transfer Control Protocol) ni un quelconque système d'acquittements.

Aucun changement dans le calcul des métriques n'est à prévoir dans le protocole selon l'invention par rapport au protocole RIP-2. Les algorithmes connus "Split Horizon" et "Poison Reverse" sont utilisés pour résoudre les problèmes de boucle dans les routes. La convergence est assurée par le fait que même un changement de métrique est considéré comme un événement et est donc diffusé. Le procédé selon l'invention utilisant les mêmes métriques que RIP-2 et utilisant les algorithmes "Split-Horizon" et "Poison Reverse", il est ainsi possible de rendre le réseau totalement homogène vis à vis du routage et donc de détecter les boucles dans les routes.

## Revendications

1. Procédé de distribution de tables de routage dans un réseau de télécommunication comportant une couche réseau incapable de faire une remise fiable, cette distribution des tables consistant à :
- diffuser (17) par inondation, d'un noeud qui démarre vers tous les autres noeud, une trame de démarrage (HELLO) pour solliciter l'envoi (36), par chacun des autres noeuds, d'une trame de réponse (RESPONSE) adressée au noeud qui a émis la trame de démarrage, cette trame de réponse contenant toutes les routes locales utilisables à partir du noeud qui émet la trame réponse considérée ;
- mettre à jour (54) la table de routage d'un noeud qui démarre, à partir des routes indiquées dans toutes les trames de réponse (RESPONSE) qu'il reçoit ;
- et à diffuser (49) par inondation une trame de mise à jour (UPDATE-r), au moins lorsque qu'un noeud détecte une modification de la configuration du réseau, cette trame contenant toutes les routes locales disponibles à partir du noeud considéré et qui ont été modifiées depuis la dernière émission d'une telle trame par ce noeud ;
**caractérisé** en ce que pour diffuser par inondation une trame de démarrage ou de mise à jour, il consiste à encapsuler les données de cette trame dans au moins une trame d'un protocole de couche de liaison à remise fiable.

2. Procédé selon la revendication 1, caractérisé en ce qu'il consiste en outre à :
- diffuser périodiquement (65) par inondation, à partir de chaque noeud du réseau, une trame (UPDATE-R) contenant toutes les routes locales disponibles à partir du noeud considéré ;
- et éliminer périodiquement (72), dans la table de routage de chaque noeud du réseau, toutes les routes dont le dernier enregistrement est plus ancien qu'une date prédéterminée.
